Europäisches Patentamt

European Patent Office

Office européen des brevets

(11) Veröffentlichungsnummer: **0 194 714**
**A2**

(12) **EUROPÄISCHE PATENTANMELDUNG**

(21) Anmeldenummer: **86200321.7**

(22) Anmeldetag: **03.03.86**

(51) Int. Cl.⁴: **G01S 11/00**

(30) Priorität: **08.03.85 DE 3508288**

(43) Veröffentlichungstag der Anmeldung:
**17.09.86 Patentblatt 86/38**

(84) Benannte Vertragsstaaten:
**BE DE FR GB IT NL SE**

(71) Anmelder: **Philips Patentverwaltung GmbH**
**Billstrasse 80**
**D-2000 Hamburg 28(DE)**
Anmelder: **N.V. Philips' Gloeilampenfabrieken**
**Groenewoudseweg 1**
**NL-5621 BA Eindhoven(NL)**

(72) Erfinder: **Heetsch, Herbert**
**Wagnerring 116**
**D-2300 Kiel 17(DE)**

(74) Vertreter: **Poddig, Dieter et al**
**Philips Patentverwaltung GmbH Billstrasse 80**
**Postfach 10 51 49**
**D-2000 Hamburg 28(DE)**

(54) **Verfahren und Anordnung zum Bestimmen einer Entfernung.**

(57) Zur Bestimmung der Entfernung zwischen zwei Punkten nach dem Einwegmeßverfahren sind in beiden Punkten genau frequenzgleich arbeitende Oszillatoren notwendig. Wenn der eine Punkt beispielsweise eine Wettersonde ist, die nur einen einfach aufgebauten Quarzoszillator enthält, kann die nach dem Einschalten des Oszillators in der Wettersonde auftretende systematische Frequenzdrift, die im wesentlichen durch die Streßalterung des Quarzes hervorgerufen wird, dadurch kompensiert werden, daß am anderen Punkt, d.h. in der Bodenstation, die Frequenz des dort enthaltenen Quarzoszillators in einem im wesentlichen gleichen Ausmaß nachgeführt wird. Auf diese Weise lassen sich kleine relative Frequenzfehler zwischen beiden Oszillatoren erreichen, so daß eine Entfernungsmessung innerhalb einer begrenzten Zeit mit guter Genauigkeit möglich ist.

Die Erfindung betrifft ein Verfahren zum Bestimmen der Entfernung zwischen einer Meßstelle und einem Gegenstand, der einen Sender enthält und durch einen quarzgesteuerten Meßoszillator erzeugte Meßimpulse mit vorgegebenem Nenn-Zeitabstand aussendet, die in der Meßstelle empfangen und deren Zeitlage mit der von Bezugsimpulsen mit gleichem konstantem Nenn-Zeitabstand, die in der Meßstelle durch einen ebenfalls quarzgesteuerten Bezugsoszillator erzeugt sind, verglichen werden, wobei aus der Veränderung der Zeitlage zwischen jeweils einem Meßimpuls und einem Bezugsimpuls gegenüber der Zeitlagenverschiebung bei einer definierten Anfangsentfernung die momentane Entfernung bestimmt wird, sowie eine Anordnung zur Durchführung dieses Verfahrens.

Ein derartiges Verfahren wird als Einwegentfernungsmeßverfahren bezeichnet und ist beispielsweise aus der DE-AS 28 07 979 bekannt. Die Genauigkeit der Entfernungsbestimmung hängt dabei ab von der Frequenzgenauigkeit der beiden Oszillatoren. Sofern die Meßstelle ortsfest ist, können dort leichter Maßnahmen ergriffen werden, um die Frequenz des Bezugsoszillators möglichst konstant zu halten. Wenn jedoch der Gegenstand, der den Meßoszillator enthält, klein und leicht sein muß und nur eine Energiequelle mit geringer Energie aufweist, wie z.B. ein Wetterballon, sind derartige Maßnahmen nicht ohne weiteres im erforderlichen Umfang möglich. Hinzu kommt, daß bei einem Wetterballon mit einer erheblichen Wahrscheinlichkeit mit dem Verlust der Meßeinrichtung gerechnet werden muß, so daß der Meßoszillator auch nicht zu teuer aufgebaut sein darf.

Wegen dieser Genauigkeitsprobleme ist es bei Wettersonden zur Höhenwindmessung bekannt, beispielsweise aus "Handbuch für Hochfrequenz-und Elektro-Techniker", Verlag für Radio-Foto-Kinotechnik GmbH, Berlin-Borsigwalde, 1957, 4. Band, Seiten 556 und 557, die aufgelassene Wettersonde vom Boden aus anzupeilen, d.h. die bekannten Zweiwegentfernungsmeßverfahren zu verwenden. Wenn derartige Verfahren jedoch im Kriegsfall eingesetzt werden, ist es für den Feind möglich, die peilenden Bodenstationen zu orten und anzugreifen, so daß das für die Bodenstation gesehen passive Einwegentfernungsmeßverfahren vorzuziehen ist.

Aufgabe der Erfindung ist es daher, ein Verfahren der eingangs genannten Art anzugeben, das besonders günstig für Wettersonden einzusetzen ist und auf einfache Weise eine Bestimmung der Entfernung mit guter Genauigkeit ermöglicht.

Diese Aufgabe wird erfindungsgemäß dadurch gelöst, daß bei einem Meßoszillator, der erst kurz vor der Bestimmung der Zeitlagenverschiebung bei der definierten Entfernung eingeschaltet wird, die Frequenz des Bezugsoszillators in einem mindestens von der Zeit abhängigen Ausmaß nachgesteuert wird.

Das erfindungsgemäße Verfahren beruht auf dem Gedanken, anstatt einer Erhöhung der Genauigkeit des Meßoszillators dessen definierte Ungenauigkeit im wesentlichen durch den Referenzoszillator nachzubilden, da die Genauigkeit der Entfernungsbestimmung nur von der relativen Frequenzdifferenz zwischen beiden Oszillatoren abhängt. Es wurde nämlich festgestellt, daß ein wesentlicher Teil der Frequenzänderung des Meßoszillators durch die sogenannte Streßalterung des Quarzes unmittelbar nach dem Einschalten des Oszillators hervorgerufen wird, wobei diese Streßalterung nach einer definierten Zeitfunktion erfolgt. Auf diese Weise ist es möglich, mit einem einfach aufgebauten Meßoszillator beispielsweise in einer Wettersonde dennoch eine gute Genauigkeit der Entfernungsbestimmung zu erreichen. Selbstverständlich können dabei bekannte einfache Maßnahmen zur Frequenzstabilisierung, insbesondere durch eine Temperaturregelung des Quarzes, zusätzlich angewendet werden.

Eine Anordnung zur Durchführung dieses Verfahrens ist dadurch gekennzeichnet, daß die Frequenz des quarzgesteuerten Bezugsoszillators über einen Steuereingang einstellbar ist, an den eine Steueranordnung angeschlossen ist, die ein die Frequenz zeitlich monoton nachsteuerndes Steuersignal erzeugt. Dies stellt eine einfache Möglichkeit zur Durchführung des erfindungsgemäßen Verfahrens dar, da ein quarzgesteuerter Oszillator in einem gewissen, jedoch ausreichenden Bereich in der Frequenz durch Veränderung insbesondere einer geeignet angebrachten Kapazität gesteuert werden kann, wobei diese Kapazität durch eine Kapazitätsdiodenanordnung gebildet werden kann, die über eine Steuerspannung als Steuersignal einstellbar ist.

Die Zeitfunktion, nach der die Streßalterung erfolgt, ist im wesentlichen eine Exponentialfunktion, die bei nicht zu großer Anforderung an die Genauigkeit linear angenähert werden kann. Eine Ausgestaltung der erfindungsgemäßen Anordnung ist daher dadurch gekennzeichnet, daß die Steueranordnung die Frequenz des Bezugsoszillators linear mit der Zeit nachsteuert. Dies ist besonders einfach zu realisieren.

Falls jedoch eine höhere Genauigkeit gefordert wird, ist es zweckmäßig, daß die Steueranordnung die Frequenz des Bezugsoszillators in einem von gemessenen Eigenschaften des individuellen Meßoszillators abhängigem Zeitverlauf nachsteuert. Die Messung der Eigenschaften des Meßoszillators erfordert keinen großen Aufwand, da für Wettersonden ohnehin jede Sonde vor Benutzung bezüglich der Kenndaten der Meßfühler durchgemessen wird.

Die Erzeugung von sich monoton ändernden Steuersignalen ist auf viele Weise möglich. Um besonders genau reproduzierbare Signale zu erhalten, ist es zweckmäßig, daß die Steueranordnung einen von einer vorgegebenen Anfangsstellung startbaren Zähler enthält, mit dessen Zählausgängen ein Digital-Analog-Umsetzer gekoppelt ist, dessen Analogausgang das Steuersignal liefert. Dadurch wird ein genau reproduzierbares linear zeitabhängiges Steuersignal erzeugt. Falls dieses Steuersignal jedoch zur Erhöhung der Genauigkeit einen definierten nichtlinearen Verlauf haben soll, beispielsweise entsprechend einer Exponentialfunktion, ist es zweckmäßig, daß zwischen dem Zähler und dem Digital-Analog-Umsetzer ein Umkodierer eingefügt ist. Ein derartiger Umkodierer ist im einfachsten Falle als Speicher zu realisieren. Zur Anpassung an verschiedene Meßoszillatoren kann dieser Speicher mehrere Bereiche aufweisen, die unterschiedliche Kurvenverläufe hervorrufen.

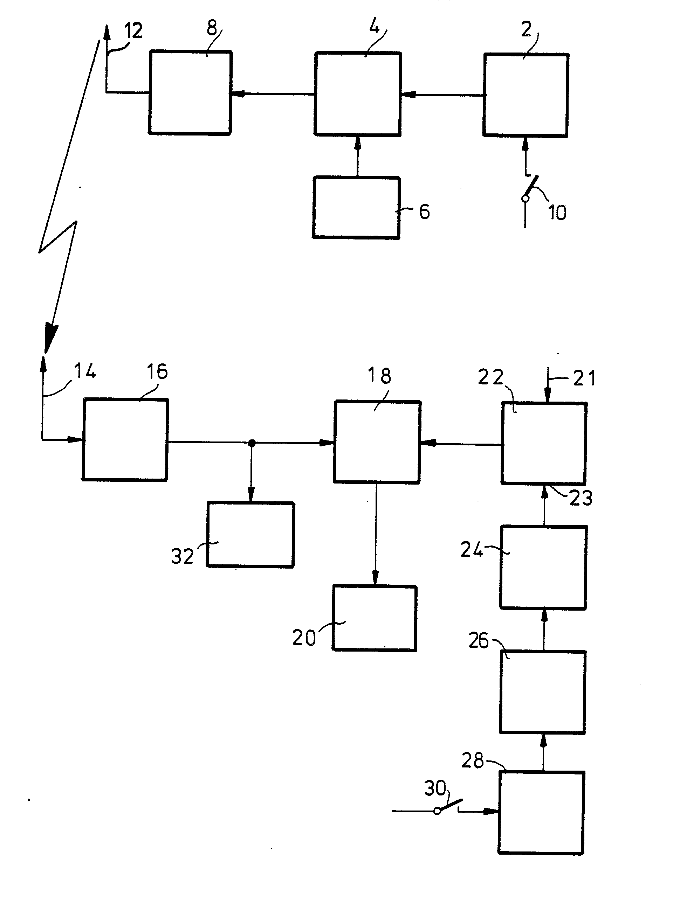

Ein Ausführungsbeispiel der Erfindung wird nachstehend anhand der Zeichnung erläutert.

Darin ist oben die Anordnung in dem zu messenden Gegenstand schematisch angegeben, der hier als Wettersonde angenommen ist und dessen ausgestrahlte Signale von der darunter schematisch angegebenen Anordnung in der Meßstelle empfangen und verarbeitet wird. Die Meßstelle ist eine feste oder fahrbare Bodenstation, von der auch die Wettersonde aufgelassen wird.

Wenn eine Wetter-und Windmessung durchgeführt werden soll, wird der Schalte 10 geschlossen, über den einem quarzgesteuerten Meßoszillator 2 sowie den übrigen Elementen der Anordnung eine Versorgungsspannung zugeführt wird. Der Meßoszillator 2 erzeugt kurze Meßimpulse beispielsweise mit einer Frequenz von 1 kHz, die in einem Modulator 4 einer Trägerfrequenz von beispielsweise 9.375 MHz modulieren. Ferner enthält die Anordnung noch allgemein mehrere Sensoren, beispielweise für die Luftfeuchtigkeit, den Luftdruck und die Temperatur, die durch den Block 6 schematisch dargestellt sind und deren elektrische Ausgangssignale ebenfalls dem Modulator 4 zugeführt werden. Der Modulator 4 steuert eine Sendestufe 8 an, die das modulierte Trägersignal verstärkt und über die Sendeantenne 12 abstrahlt.

Das abgestrahlte Signal wird in der Bodenstation von der Empfangsantenne 14 aufgenommen und dem Empfänger 16 zugeführt, der dieses Signal demoduliert und die aufmodulierte Nutzinformation wieder abtrennt. Die Sensorinformation, die in der Wettersonde von den Sensoren im Block 6 erzeugt wurde, wird in der Bodenstation der Einheit 32 zur Auswertung dieser Meßwerte zugeführt. Die von dem Meßoszillator 2 in der Meßsonde stammenden Meßimpulse werden dagegen dem Vergleicher 18 zugeführt, der an einem anderen Eingang Bezugsimpulse von einem Bezugsoszillator 22 empfängt.

Dieser Bezugsoszillator 22 hat zwei Eingänge 21 und 23, mittels denen die Phase und die Frequenz der dem Vergleicher 18 zugeführten Bezugsimpule eingestellt werden kann. Tatsächlich besteht der Bezugsoszillator 22 ebenso wie der Meßoszillator 2 aus einem Quarzoszillator, der durch einen Thermostaten temperaturstabilisiert ist und ein Signal mit hoher Frequenz erzeugt, beispielsweise eine Frequenz im Bereich von einigen MHz. Diese Frequenz ist so gewählt, daß mittels einer Anzahl nachgeschalteter binärer bzw. binärdekadischer Teilerstufen ein Signal mit einer Frequenz von 1 kHz erzeugt wird, das eine Folge von Meßimpulsen darstellt. Die Phase dieser Meßimpulse kann beispielsweise durch Rückstellen aller Teilerstufen zu einem bestimmten Zeitpunkt eingestellt werden. Dieses Einstellen erfolgt zweckmäßig beim Start der Wettersonde bei einer definierten Anfangsentfernung von der Bodenstation, vorzugsweise der Entfernung Null. Die Phase der Bezugsimpulse wird dann gleich der der Meßimpulse von der Wettersonde eingestellt, so daß die beiden Impulse gleichzeitig eintreffen, und dieser Gleichzeitigkeit wird in einer Anzeigeeinrichtung 20 die Entfernung Null zugeordnet.

Der Steuereingang 23 für die Frequenz wirkt zweckmäßig direkt auf den Quarzoszillator im Bezugsoszillator 22 und verändert beispielsweise eine Kapazitätsdiode, die als Lastkapazität an den Quarz geschaltet sein kann. Es ist am Eingang 23 im Gegensatz zum Eingang 21 eine ständig vorhandene Steuerspannung erforderlich, die von einem Digital-Analog-Wandler 24 geliefert wird.

Dieser Digital-Analog-Wandler 24 wird über einen Zähler 28 angesteuert, der durch Schließen eines Schalters 30 gestartet wird. Dabei wird der Schalter 30 vorzugsweise gleichzeitig mit dem Schalter 10 geschlossen, er kann jedoch auch dagegen verzögert geschlossen werden, um dem Meßoszillator 2 in der Wettersonde das Aufheizen zu ermöglichen, damit der darin enthaltene Quarzoszillator eine stabile Anfangsfrequenz erreicht. Als zusätzliche Maßnahme kann dann der Zähler 28 auf einen Anfangswert eingestellt werden, so daß die hohe Frequenz des Quarzoszillators im Bezugsoszillator 22 gleich der stabilen Anfangsfrequenz des Quarzoszillators im Meßoszillator 2 ist.

Wenn nun die Wettersonde aufgelassen wird und diese sich von der Bodenstation entfernt, treffen die von der Wettersonde erzeugten Meßimpulse mit zunehmender Entfernung der Wettersonde stärker verzögert beim Vergleicher 18 ein, und die Verzögerung ist ein unmittelbares Maß für die Entfernung, wenn beide Oszillatoren mit genau gleicher Frequenz arbeiten. Da dies praktisch nie der Fall ist, ergibt sich ein absoluter zeitabhängiger Fehler $F = d.c$,

worin d die relative Änderung der Frequenz der beiden Oszillatoren untereinander und c die Lichtgeschwindigkeit ist. Bei einer relativen Frequenzänderung von $d = 10^{-10}$ ergibt sich also folgender Fehler

$$F = 10^{-10} \times 300.000 = 3 \times 10^{-5} \text{km/s} = 0,108 \text{km/Std.}$$

Eine relative kurzzeitige Frequenzstabilität von $10^{-10}$ ist bei dem Bezugsoszillator 22 noch zu erreichen, nicht jedoch ohne weiteres bei dem Meßoszillator 2 in der Wettersonde. Der wesentliche Teil der Frequenzdrift im Meßoszillator 2 entsteht durch die sogenannte Streßalterung des darin enthaltenen Steuerquarzes, die zeitlich etwa nach einer Exponentialfunktion verläuft. Eine Kompensation dieser Frequenzdrift im Meßoszillator 2 wäre zwar möglich, würde jedoch einen merklichen Aufwand erfordern, der in jeder Meßsonde vorhanden sein müßte, wobei zu berücksichtigen ist, daß ein wesentlicher Teil der Meßsonden endgültig verloren geht. Bei der in Figur dargestellten Anordnung wird daher die Frequenz des Bezugsoszillators 22 dem Verlauf der Frequenzdrift des Meßoszillators 2 nachgesteuert, indem dem Steuereingang 23 eine etwa entsprechende Steuerspannung zugeführt wird.

Im einfachsten Falle kann die exponentielle Frequenzdrift im Meßoszillator 2 durch eine zeitlich linear verlaufende Steuerspannung angenähert werden. Durch Starten des Zählers 28 über den Schalter 30, wodurch dieser Impulse zählt, die beispielsweise vom Bezugsoszillator 22, jedoch auch von einem beliebigen anderen Oszillator mit geringerer Frequenzkonstanz erzeugt sein können, erhöht sich der Zählerstand 28 linear mit der Zeit, und entsprechend erhöht sich die aus diesem Zählerstand durch den Analog-Digital-Umsetzer 24 erzeugte Steuerspannung am Eingang 23 des Bezugsoszillators 22.

Da jede Wettersonde vor Benutzung zunächst gemessen wird, insbesondere hinsichtlich der Kennlinien der darin verwendeten Sensoren, kann auch die Frequenz und vor allem die Anfangs-Frequenzdrift des Meßoszillators 2 gemessen werden. Davon abhängig kann die Steilheit, d.h. die Frequenzänderung pro Zeiteinheit im Bezugsoszillator 22 eingestellt werden, indem die dem Zähler 28 zugeführten Impulse in der Frequenz entsprechend eingestellt werden. Weiterhin können nichtlineare Zusammenhänge zwischen Steuerspannung am Eingang 23 und Frequenz des Bezugsoszillators 22 und/oder im zeitlichen Verlauf der Frequenzänderung, insbesondere zur Erzielung eines exponentiellen Verlaufs, dadurch erzielt werden, daß dem Zähler 28 ein Umkodierer 26 nachgeschaltet ist, der beispielsweise als Festwertspeicher ausgebildet ist und aus der zeitlich linear ansteigenden Folge von Zählerständen des Zählers 28 eine nichtlinear sich ändernde Folge von Digitalwerten erzeugt, die vom Digital-Analog-Wandler 24 in eine entsprechende sich zeitlich nichtlinear ändernde analoge Steuerspannung umgesetzt wird. Bei Verwendung eines Festwertspeichers stellen dabei die Zählerstände die Adressen des Speichers dar. Durch Verwendung eines größeren Festwertspeichers mit mehreren Adressenbereichen ist es möglich, verschiedene Kennlinien einstellbar zu erzeugen.

Auf diese Weise ist es möglich, die Frequenz des Bezugsoszillators 22 über eine längere Zeit der Frequenz des Meßoszillators in der Wettersonde anzugleichen, so daß eine ausreichende Genauigkeit bei der Bestimmung der Entfernung erzielt werden kann.

## Ansprüche

1. Verfahren zum Bestimmen der Entfernung zwischen einer Meßstelle und einem Gegenstand, der einen Sender enthält und durch einen quarzgesteuerten Meßoszillator erzeugte Meßimpulse mit vorgegebenem Nenn-Zeitabstand aussendet, die in der Meßstelle empfangen und deren Zeitlage mit der von Bezugsimpulsen mit gleichem konstantem Nenn-Zeitabstand, die in der Meßstelle durch einen ebenfalls quarzgesteuerten Bezugsoszillator erzeugt sind, verglichen werden, wobei aus der Veränderung der Zeitlage zwischen jeweils einem Meßimpuls und einem Bezugszimpuls gegenüber der Zeitlagenverschiebung bei einer definierten Anfangsentfernung die momentane Entfernung bestimmt wird, dadurch gekennzeichnet, daß bei einem Meßoszillator, der erst kurz vor der Bestimmung der Zeitlagenverschiebung bei der definierten Entfernung eingeschaltet wird, die Frequenz des Bezugsoszillators in einem mindestens von der Zeit abhängigen Ausmaß nachgesteuert wird.

2. Anordnung zur Durchführung des Verfahrens nach Anspruch 1, dadurch gekennzeichnet, daß die Frequenz des quarzgesteuerten Bezugsoszillators (22) über einen Steuereingang (23) einstellbar ist, an dem eine Steueranordnung (24, 28) angeschlossen ist, die ein die Frequenz zeitlich monoton nachsteuerndes Steuersignal erzeugt.

3. Anordnung nach Anspruch 2, dadurch gekennzeichnet, daß die Steueranordnung (24, 28) die Frequenz des Bezugsoszillators (22) linear mit der Zeit nachsteuert.

4. Anordnung nach Anspruch 2 oder 3, dadurch gekennzeichnet, daß die Steueranordnung (24, 26, 28) die Frequenz des Bezugsoszillators (22) in einem von gemessenen Eigenschaften des individuellen Meßoszillators (2) abhängigem Zeitverlauf nachsteuert.

5. Anordnung nach Anspruch 2 oder einem der folgenden, dadurch gekennzeichnet, daß die Steueranordnung (24, 26) einen von einer vorgegebenen Anfangsstellung startbaren Zähler (28) enthält, mit dessen Zählausgängen ein Digital-Analog-Umsetzer (24) gekoppelt ist, dessen Analogausgang das Steuersignal liefert.

6. Anordnung nach Anspruch 4 und 5, dadurch gekennzeichnet, daß zwischen dem Zähler (28) und dem Digital-Analog-Umsetzer (24) ein Umkodierer (26) eingefügt ist.